# EUROPÄISCHE PATENTSCHRIFT

(11) **EP 1 897 208 B1**
(45) Veröffentlichungstag und Bekanntmachung des Hinweises auf die Patenterteilung: **08.10.2008**
(21) Anmeldenummer: 06754994.9
(22) Anmeldetag: 03.05.2006
(51) Int. Cl.: H02K 7/116, H02K 5/08

(54) **GETRIEBE- ANTRIEBSEINHEIT MIT SYMMETRISCH ANGEORDNETEM ANSCHLUSS-STECKER**
TRANSMISSION/DRIVE UNIT WITH A SYMMETRICALLY ARRANGED CONNECTING PLUG
UNITE D'ENTRAINEMENT ET DE TRANSMISSION A FICHE DE RACCORDEMENT A DISPOSITION SYMETRIQUE

(30) Priorität: 22.06.2005 DE 102005028815
(43) Veröffentlichungstag der Anmeldung: 12.03.2008
(73) Patentinhaber: ROBERT BOSCH GMBH, 70442 Stuttgart (DE)
(72) Erfinder: LAMPERT, Rico, Farmington Hills, Michigan 48331 (US); HAUSSECKER, Walter, 77830 Buehlertal (DE); HUCK, Thomas, 77836 Rheinmuenster (DE); MILI, Tarek, 76133 Karlsruhe (DE)
(86) Internationale Anmeldenummer: PCT/EP2006/062033
(87) Internationale Veröffentlichungsnummer: WO 2006/136473

(56) Entgegenhaltungen:
- DE-A1- 10 334 611
- DE-A1- 19 819 996
- DE-U1- 20 113 687
- US-A1- 2002 130 567

## Beschreibung

### Stand der Technik

Die Erfindung betrifft eine Getriebe-Antriebseinheit mit einem Elektromotor und einem Getriebe nach der Gattung des unabhängigen Anspruchs 1.

Mit der DE 103 34 611 A1 ist eine solche Getriebe-Antriebseinheit bekannt geworden, bei der ein Elektromotor mit einem nachfolgenden, mehrstufigen Getriebe in einem schalenförmigen Gehäuse angeordnet ist. In einer speziellen Ausführung ist dieses Gehäuse näherungsweise symmetrisch zur Lagerwelle eines Abtriebselementes und zum Massenschwerpunkt der Antriebseinheit ausgebildet. Bei dieser Ausführung ist kein elektrischer Anschlussstecker offenbart. Der Kollektor ist an einem Ende der Ankerwelle angeordnet, so dass der Anschlussstecker naheliegenderweise an einem Ende der Ankerwelle angeordnet ist, wie dies bei weiteren ähnlichen Ausführungsbeispielen der besagten Patentschrift ausgeführt ist.

Eine solche Ausführung hat den Nachteil, dass bei der Verwendung eines einzigen identischen Antriebstyps für verschiedene Einbaulagen, wie dies beispielsweise für Fensterheberantriebe in der linken und rechten Fahrzeugtür notwendig ist, eine unterschiedliche elektrische Kabelzuführung notwendig ist. Dadurch ist bei der Konzeption und der Montage des Kabelbaums auf zwei unterschiedliche Ausführungsvarianten zu achten, was zu einem erheblichen Mehraufwand führt.

Weitere Getriebe-Antriebseinheiten sind aus US 2002/0130567 A1 und DE 198 19996 A1 bekannt.

### Vorteile der Erfindung

Die erfindungsgemäße Getriebe-Antriebseinheit mit den Merkmalen des unabhängigen Anspruchs 1 hat den Vorteil, dass durch die symmetrische Anordnung des elektrischen Anschlusssteckers bezüglich einer Symmetrieebene senkrecht zur Ankerwelle die Antriebseinheit in unterschiedlichen Einbaulagen in identischer Weise mit den elektrischen Zuleitungen verbunden werde kann. Hierzu ist der elektrische Anschlussstecker nicht an einem Ende der Ankerwelle, sondern in etwa mittig zur Ankerwelle, am Gehäuse angeordnet. Die Symmetrieebene verläuft dabei etwa mittig durch das Abtriebsrad und durch die Steckerpins des Anschlusssteckers.

Durch die in den Unteransprüchen ausgeführten Merkmale sind vorteilhafte Weiterbildungen der Vorrichtung nach den unabhängigen Ansprüchen möglich. Bevorzugt werden die Pins des Anschlusssteckers in radialer Richtung zur Ankerwelle angeordnet, damit der entsprechende Gegenstecker etwa mittig zur Ankerwelle in beiden Einbaulagen näherungsweise identisch mit dem Anschlussstecker verbunden werden kann.

Dazu sind etwa in der Mitte der Ankerwelle ein Kollektor und ein Positionsgeber angeordnet, die mit einem kompakten elektromechanischen Modul zusammenwirken. Dieses Modul überträgt sowohl den elektrischen Antriebsstrom, als auch die Positionssignale von und zur Ankerwelle und ist gleichzeitig mit dem Anschlussstecker elektrisch verbunden, so dass innerhalb des Gehäuses sehr kurze elektrische Wege realisiert sind.

In einer bevorzugten Ausgestaltung weist das schalenförmige Gehäuse eine etwa dreieckförmige Grundfläche auf, wobei die Ankerwelle entlang der Basisseite dieses Dreiecks verläuft, und die Symmetrieebene die Höhe eines etwa gleichschenkligen Dreiecks bildet. Dadurch weist das Gehäuse eine sehr kompakte, wenig zerklüftete symmetrische Außenkontur auf, die in verschiedenen Einbaulagen identisch verbaubar ist.

Um die Antriebseinheit in der linken und rechten Fahrzeugtür in gleicher Weise zu befestigen, sind die Anschraubpunkte der Antriebseinheit ebenfalls symmetrisch zur Symmetrieebene angeordnet. Dazu sind beispielsweise am äußeren Umfang des Gehäuses Anschraubdome angeformt, oder in das Gehäuse integriert, wobei beispielsweise bei drei Anschraubpunkten einer auf der Symmetrieebene liegt.

Damit die Drehachse des Abtriebsrads auf der Symmetrieebene, und damit etwa mittig im Gehäuse angeordnet werden kann, ist zwischen der Schnecke und dem Antriebsrad zur Drehmomentübertragung ein Zwischenzahnrad angeordnet. Die Abmessung der Getrieberäder wird dabei vorteilhaft so gewählt, dass einerseits die Symmetriebedingungen erfüllt werden, und andererseits die gewünschte Untersetzung erzielt wird.

Von Vorteil ist es, wenn das Zwischenzahnrad gleichachsig mit einem weiteren Getriebezahnrad verbunden ist, wobei das Zwischenzahnrad mit der Schnecke und das weitere Getriebezahnrad mit dem Abtriebsrad kämmt.

Um die auftretenden Getriebekräfte auf das Gehäuse abzuleiten ist es besonders günstig, das Abtriebsrad auf einer ersten drehfesten Welle zu lagern und das Zwischenzahnrad mit dem weiteren Getriebezahnrad auf einer zweiten Welle anzuordnen. Dabei können die beiden Drehachsen fertigungstechnisch in einfacher Weise als gehäusefeste Lagerbolzen ausgebildet werden.

Indem das weitere Getriebezahnrad axial neben dem Zwischenzahnrad und damit versetzt zur Längsachse der Ankerwelle angeordnet ist, ist das Abtriebsrad entlang der ersten Drehachse ebenfalls versetzt zur Ankerwelle angeordnet. Dadurch lässt sich die Bauhöhe des Getriebegehäuses im Bereich des Abtriebsrades reduzieren, was für viele Verstell-Anwendungen im Kraftfahrzeug von Vorteil ist.

Weist beispielsweise das Abtriebsrad und das weitere Getriebezahnrad einen minimalen Abstand zur Bodenfläche des Gehäuses auf oder liegen diese axial an der ebenen Bodenfläche an, kann einerseits die Bodenfläche des Gehäuses in einfacher Weise als ebene Fläche ausgebildet werden, wodurch axial über dem Abtriebszahnrad im Bereich der geringen Gehäusehöhe Bauraum für ein Drehmomentübertragungsmittel zur Verfügung gestellt werden kann.

Besonders vorteilhaft kann hierbei auf der ersten Drehachse eine Seiltrommel oder ein Abtriebsritzel angeordnet werden, das drehfest mit dem Abtriebsrad verbunden ist. Dabei kann das Momentübertragungselement kundenspezifisch ausgebildet werden und Bestandteil einer komplexeren Mechanik sein, die beispielsweise ein bewegliches Teil im Kraftfahrzeug verstellt. Das hat den Vorteil, dass zur Kraftübertragung kein zusätzlicher Bauraum in axialer Richtung entlang der ersten Drehachse notwendig ist. Eine solche, verglichen mit der Gesamtbauhöhe der Antriebseinheit im Bereich des Abtriebsrads sehr flach bauende Antriebseinheit, ist für viele Anwendungen im Kraftfahrzeug, wie beispielsweise im Schiebedach und in den Seitentüren oder bei der Sitzverstellung von besonderem Interesse.

### Zeichnungen

In der Zeichnung sind verschiedene Ausführungsbeispiele einer erfindungsgemäßen Getriebe-Antriebseinheit dargestellt und in der nachfolgenden Beschreibung näher erläutert. Es zeigen
Figur 1 ein erstes Ausführungsbeispiel einer Getriebe-Antriebseinheit und
Figur 2 eine Ansicht eines weiteren Ausführungsbeispiels, und
Figur 3 einen Schnitt entlang der Linie III - III der Antriebseinheit in Figur 2.

### Beschreibung der Ausführungsbeispiele

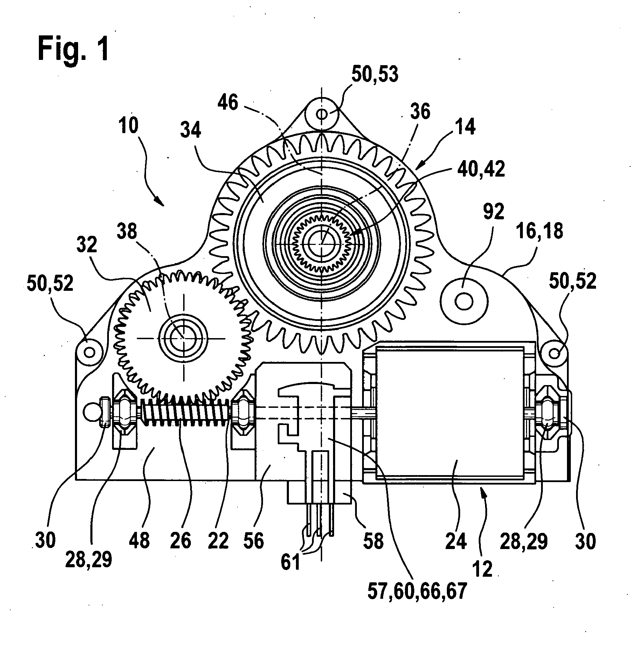

In Figur 1 ist am Beispiel eines Fensterheberantriebs 10 eine Getriebe-Antriebseinheit 10 dargestellt, bei der ein Elektromotor 12 und ein Getriebe 14 in einem gemeinsamen Gehäuse 16 angeordnet sind. In Figur 1 ist ein erstes schalenförmiges Gehäuseteil 18 dargestellt, das mit einem nicht näher dargestellten zweiten Gehäuseteil 20, das als Deckel ausgebildet ist, verschließbar ist. In dem schalenförmigen Gehäuseteil 18 ist der vollständige Elektromotor 12 mit einem Ankerpaket 24 und einer Ankerwelle 22 mit einer darauf angeordneten Schnecke 26 angeordnet. Die Ankerwelle 22 ist über mehrere Lager 28, die beispielsweise als Kalottenlager 29 ausgebildet sind, im Gehäuse 16 gelagert. Für den axialen Anschlag der Ankerwelle 22 sind an deren Enden jeweils Anlaufscheiben 30 angeordnet. Die Schnecke 26 kämmt im Ausführungsbeispiel mit einem Zwischenzahnrad 32, das wiederum mit einem Abtriebsrad 34 in Eingriff steht. Das Abtriebsrad 34 ist dabei auf einer ersten Drehachse 36 und das Zwischenrad 32 auf einer zweiten Drehachse 38 drehbar gelagert. Mit dem Abtriebsrad 34 ist ein Abtriebsritzel 40 drehfest verbunden, das als Drehmomentübertragungselement 42 einer nicht näher dargestellten Mechanik 44 dient, mit der beispielsweise ein bewegliches Teil im Kraftfahrzeug verstellt wird. Das Gehäuse 16 ist symmetrisch zu einer Symmetrieebene 46 ausgebildet, die näherungsweise senkrecht zur Ankerwelle 22 und durch die erste Drehachse 36 des Abtriebsrads 34 verläuft. Im Ausführungsbeispiel weist das erste Gehäuseteil 18 dabei eine näherungsweise dreieckförmige Grundfläche 48 auf, die durch die Symmetrieebene 46 wiederum in zwei gleichförmige Dreiecksflächen unterteilt ist. Am Gehäuse 16 sind Befestigungspunkte 50 angeordnet, die ebenfalls symmetrisch zu der Symmetrieebene 46 liegen. Dabei sind beispielsweise drei Befestigungsdome 52 am Gehäuse 16 angeformt, wobei ein erster Befestigungsdom 53 direkt in der Symmetrieebene liegt, und zwei weitere Befestigungsdome 52 im Bereich der Enden der Ankerwelle 22 symmetrisch zur Symmetrieebene 46 angeformt sind. Das Gehäuse 16 ist beispielsweise als Kunststoff-Spritzgussteil ausgebildet, so dass die Befestigungsdome 52 einstückig mit diesem hergestellt werden können. Im Bereich, wo die Symmetrieebene 46 die Ankerwelle 22 schneidet, ist im Gehäuse 16 ein Elektronikmodul 56 angeordnet, das elektrisch mit einem Anschluss-Stecker 58 verbunden ist, der im Bereich der Symmetrieebene 46 am Gehäuse 16 angeformt ist. Der Anschluss-Stecker 58 weist dabei mehrere Pins 61 auf, die sowohl den Motorstrom, als auch Positionssignale übertragen. Das Elektronikmodul 56 weist hierzu einen Bürstenhalter 60 auf, der mit einem auf der Ankerwelle 22 angeordneten Kommutator 62 zusammenwirkt. Auf der Ankerwelle 22 ist des Weiteren ein Positionsgeber 64, beispielsweise in Form eines Ringmagneten 65 angeordnet, dessen Positionssignale von einem Signalaufnehmer 66 erfasst werden, der beispielsweise als Hallsensorsystem 67 ausgebildet ist. Das Elektronikmodul 56 ist im Ausführungsbeispiel in Sandwich-Bauweise ausgebildet, bei dem mehrere elektrisch leitfähige Substrate mit einer Vergussmasse zu einem kompakten Kunststoffkörper 56 umspritzt sind. Das Elektronikmodul 56 weist ein Stanzgitter 57 auf, das mit den einzelnen Pins 61 des Anschluss-Steckers 58 verbunden ist. Das Elektronikmodul 56 wird von der Symmetrieebene 46 durchschnitten, ist jedoch nicht symmetrisch zu dieser angeordnet. Der Anschluss-Stecker 58 mit den Pins 61 ist jedoch näherungsweise symmetrisch zur Symmetrieebene 46 ausgebildet, damit der korrespondierende, nicht näher dargestellte Gegenstecker der Versorgungsleitungen, in verschiedenen Einbaupositionen in identischer Weise angeordnet werden kann.

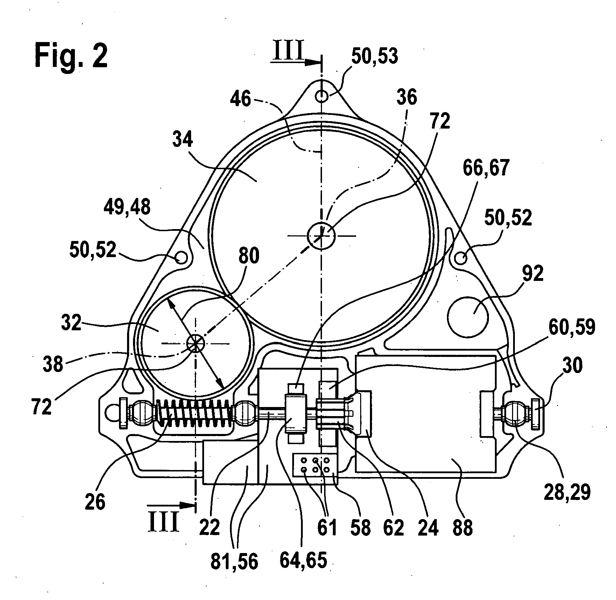

In Figur 2 ist ein weiteres Ausführungsbeispiel einer Getriebe-Antriebseinheit 10 ohne Deckel 20 dargstellt. Das Antriebsmoment wird wieder über die Schnecke 26 auf das Zwischenzahnrad 32 übertragen. Mit dem Zwischenzahnrad 32 ist ein weiteres Getriebezahnrad 70 drehfest verbunden, das mit dem Abtriebsrad 34 kämmt. Die Bodenfläche 48 des schalenförmigen Gehäuseteils 18 ist hierbei als ebene Fläche 49 ausgebildet, an der die beiden Drehachsen 36 und 38 als gehäusefeste Lagerbolzen 72 ausgebildet sind.

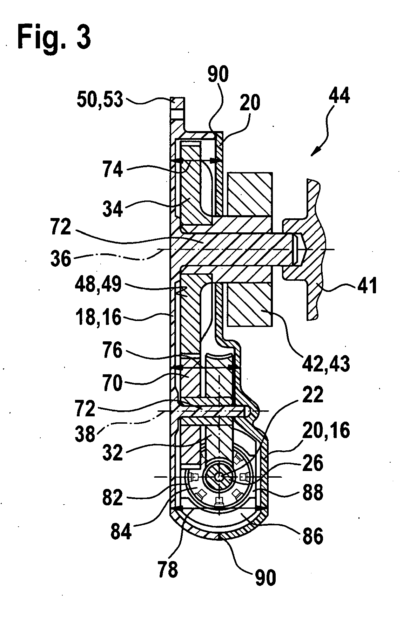

Wie aus Figur 3 ersichtlich, ist das Getriebezahnrad 70 zwischen der Bodenfläche 48 und der Ankerwelle 23 mit geringst möglichem Abstand zur Bodenfläche 48 angeordnet. Dadurch ist auch das Abtriebsrad 34 unmittelbar an der ebenen Bodenfläche 48 auf der ersten Drehachse 38 angeordnet, so dass in diesem Bereich das Gehäuse 16 eine deutlich geringere Bauhöhe 74 aufweist, als die Bauhöhe 76 im Bereich des Zwischenzahnrads 32 oder der Bauhöhe 78 im Bereich des Ankerpakets. Der Deckel 20 des Gehäuses 16 ist daher stufenförmig ausgebildet, so dass im Bereich des Abtriebsrads 34 außerhalb des Gehäuses 16 auf der ersten Drehachse 36 das Momentübertragungselement 42 drehfest mit dem Abtriebsrad 34 verbindbar ist. Durch die minimale Bauhöhe 74 im Bereich des Abtriebrads 34 kann auch nach der Montage des kundenspezifischen Momentübertragungselements 42 eine sehr flach bauende Getriebe-Antriebseinheit 10 geschaffen werden, die in die Verstellmechanik 44 des zu verstellenden Teils auch in verschiedenen Einbaulagen identisch integriert werden kann.

In Figur 3 ist das Momentübertragungselement 42 als Seiltrommel 43 dargestellt, wobei der Lagerbolzen 72 der ersten Drehachse 36 in einem Gehäuseteil 41 des Momentübertragungselements 42 gegengelagert ist. Das Zwischenzahnrad 32 und das weiteren Getriebezahnrad 70, die zusammen auf dem an der Bodenfläche 48 angeformten Lagerbolzen 72 gelagert sind, weisen in Figur 3 einen näherungsweise gleichen Durchmesser 80 auf. In einer Variation können die Durchmesser 80 des Zwischenzahnrads 32 und des Getriebezahnrads 70 auch voneinander abweichen, um eine andere Getriebeuntersetzung zu realisieren.

Aus Figur 2 ist ersichtlich, dass das Gehäuse 16 symmetrisch zur Symmetrieebene 46 ausgebildet ist, die durch die Drehachse 36 des Abtriebsrads 34 verläuft, und die Ankerwelle 22 etwa mittig schneidet. Die Anschraubpunkte 50 sind in diesem Fall stärker in die Gehäusekontur integriert und liegen wiederum symmetrisch zur Symmetrieebene 46. Der Anschluss-Stecker 58 mit den Pins 61 liegt in diesem Ausführungsbeispiel nicht völlig exakt zur Symmetrieebene 46, jedoch ist die Abweichung von der exakten Symmetrie so gering, dass dies für die Anordnung des korrespondierenden Gegensteckers an den entsprechenden Einbaupositionen des Antriebs 10 vernachlässigbar ist. Die Pins 61 erstrecken sich in diesem Fall wiederum radial zur Ankerwelle 22, jedoch hier näherungsweise senkrecht zur Bodenfläche 48, bzw. zum Deckel 20 des Gehäuses 16. Die Pins 61 sind mit dem Elektronikmodul 56 verbunden, das bei dieser Ausführung als Leiterplatte 81 ausgebildet ist. Auf der Leiterplatte 81 sind als Signalaufnehmer 66 Hallsensoren 67 angeordnet, die mit einem auf der Ankerwelle 22 angeordneten Ringmagneten 65 als Positionsgeber 64 zusammenwirken. Am Elektronikmodul 56 sind ebenfalls Bürstenhalter 60, beispielsweise in Form von Hammerbürsten 59 befestigt, die die Stromversorgung mit dem Kommutator 62 herstellen. Der Kommutator 62 ist elektrisch, mit auf Lamellen 82 angeordneten Wicklungen 84 verbunden, die das Ankerpaket 24 bilden. Das Ankerpaket 24 wird mittels Permanentmagnete 86 angetrieben, die mittels eines magnetischen Rückschluss 88 miteinander verbunden sind und innerhalb des schalenförmigen Kunststoff-Gehäuses 16 angeordnet sind. Zwischen den beiden Gehäuseteilen 18 und 20 ist eine Dichtung 90 angeordnet, die gemäß Figur 3 näherungsweise in einer Ebene, ohne Abstufungen angeordnet ist. Im Gehäusedeckel 20 ist in Figur 2 schematisch eine Membran 92 angeordnet, die einen Druckausgleich zwischen dem Gehäuseinnenraum und der Umgebung ermöglicht, ohne dass Feuchtigkeit durch die Membran 92 hindurch treten kann.

Es sei angemerkt, dass hinsichtlich der in allen Figuren gezeigten Ausführungsbeispiele innerhalb des durch die Ansprüche definierten Schutzbereichs vielfältige Kombinationsmöglichkeiten der einzelnen Merkmale untereinander möglich sind. So kann die konkrete Ausgestaltung der Gehäusekontur auch von einer dreieckförmigen Grundfläche abweichen, und beispielsweise oval oder viereckig ausgebildet sein, wobei das Gehäuse 16 immer näherungsweise symmetrisch zur Symmetrieebene 46 ausgebildet ist. Ebenso kann die Anordnung und Ausformung des Anschluss-Steckers 58 und der Pins 61 variiert werden, wobei diese zumindest näherungsweise derart auf der Symmetrieebene 46 angeordnet werden sollen, dass der korrespondierende Gegenstecker in verschiedenen Einbaulagen des Antriebs 10 immer an der gleichen Stelle angeordnet werden kann. Der Anschluss-Stecker 58 mit den Pins 61 kann sich dabei sowohl entlang der Bodenfläche 48, als auch in etwa senkrecht dazu erstrecken. Dabei ist auch eine abgewinkelte Anordnung des Anschluss-Steckers 58 im Bereich der Symmetrieebene 46 möglich. Die konkrete Ausgestaltung des Getriebes 14 kann ebenfalls variiert werden, beispielsweise mehrere Getriebestufen mit noch weiteren Drehachsen aufweisen, wobei die Drehachse 36 des Abtriebsrads 34 in der Symmetrieebene 46 des Gehäuses 16 liegt. So kann insbesondere die erfindungsgemäße Reduzierung der Bauhöhe 74 im Bereich des Abtriebsrads 34 auch unabhängig von der Anordnung des Anschluss-Steckers 58 bezüglich der Symmetrieebene 46 realisiert werden. Bevorzugt wird die Erfindung für den Antrieb von Fensterscheiben im Kraftfahrzeug eingesetzt, wobei in der linken und rechten Fahrzeugtür die identische Getriebe-Antriebseinheit 10 einsetzbar ist.

## Patentansprüche

1. Getriebe-Antriebseinheit (10) mit einem Gehäuse (16, 18, 20), in dem ein Elektromotor (12) mit einem Ankerpaket (24) und einer eine Schnecke (26) aufweisenden Ankerwelle (22), sowie ein dieser nachgeordnetes Getriebe (14) angeordnet sind, wobei das Getriebe (14) ein auf einer Drehachse (36) gelagertes Abtriebsrad (34) aufweist,
und das Gehäuse (16, 18, 20) näherungsweise symmetrisch zu einer quer zur Ankerwelle (22) angeordneten Symmetrieebene (46) ausgebildet ist, die durch die Drehachse (36) des Abtriebsrads (34) verläuft,
**dadurch gekennzeichnet, dass** zwischen dem Ankerpaket (24) und der Schnecke (26) an dem Gehäuse (16, 18, 20) ein elektrischer Anschluss-Stecker (58) angeordnet ist, und die Symmetrieebene (46) durch den Anschluss-Stecker (58) verläuft.

2. Getriebe-Antriebseinheit (10) nach Anspruch 1, **dadurch gekennzeichnet, dass** der Anschluss-Stecker (58) Steckerpins (61) aufweist, die radial von der Ankerwelle (22) abstehen.

3. Getriebe-Antriebseinheit (10) nach einem der Ansprüche 1 oder 2, **dadurch gekennzeichnet, dass** die Steckerpins (61) mit einem kompakten Elektronikmodul (56) verbunden sind, das von der Symmetrieebene (46) durchschnitten wird und mit einem Kollektor (62) und einem Positionsgeber (64) zusammenwirkt, die auf der Ankerwelle (22) angeordnet sind.

4. Getriebe-Antriebseinheit (10) nach einem der vorhergehenden Ansprüche, **dadurch gekennzeichnet, dass** das Gehäuse (16, 18, 20) im Wesentlichen eine dreieckige Grundfläche (24) aufweist, die von der Symmetrieebene (46) in zwei näherungsweise gleichförmige Dreiecke unterteilt wird.

5. Getriebe-Antriebseinheit (10) nach einem der vorhergehenden Ansprüche, **dadurch gekennzeichnet, dass** das Gehäuse (16, 18, 20) ein Anschraubbild zur Befestigung am Kraftfahrzeug aufweist, das ebenfalls im Wesentlichen symmetrisch zur Symmetrieebene (46) ausgebildet ist, wobei insbesondere mindestens ein Anschraub-Punkt in der Symmetrieebene (46) liegt.

6. Getriebe-Antriebseinheit (10) nach einem der vorhergehenden Ansprüche, **dadurch gekennzeichnet, dass** zur Drehmomentübertragung zwischen der Schnecke (26) und dem Abriebselement (34) ein Zwischenzahnrad (32) auf einer zweiten Drehachse (38) angeordnet ist, das insbesondere mit der Schnecke (26) kämmt.

7. Getriebe-Antriebseinheit (10) nach einem der vorhergehenden Ansprüche, **dadurch gekennzeichnet, dass** auf der zweiten Drehachse (38) ein weiteres Getriebezahnrad (70) angeordnet ist, das drehfest mit dem Zwischenzahnrad (32) verbunden ist, und insbesondere in das Abtriebsrad (34) eingreift.

8. Getriebe-Antriebseinheit (10) nach einem der vorhergehenden Ansprüche, **dadurch gekennzeichnet, dass** die erste und/oder zweite Drehachse (36, 38) als gehäusefeste Lagerbolzen (72) ausgebildet sind, auf denen drehbar das Abtriebsrad (34) bzw. das Zwischenzahnrad (32) gelagert sind.

9. Getriebe-Antriebseinheit (10) nach einem der vorhergehenden Ansprüche, **dadurch gekennzeichnet, dass** das Gehäuse (16) einen im Wesentliche schalenförmigen Grundkörper (18) und einen radial zur Ankerwelle (22) montierbaren Deckel (20) aufweist, wodurch sich bei geschlossenem Gehäuse (16, 18, 20) eine Bauhöhe (74, 76, 78) des Gehäuses (16, 18, 20) ergibt, wobei die Bauhöhe (74) im Bereich des Abtriebelements (34) geringer ist, als die Bauhöhe (76) im Bereich des Zwischenzahnrads (32).

10. Getriebe-Antriebseinheit (10) nach einem der vorhergehenden Ansprüche, **dadurch gekennzeichnet, dass** die Grundfläche (48) des Gehäuses (16, 18, 20) näherungsweise als ebene Bodenfläche (49) ausgebildet ist, und das Abtriebsrad (34) und das Getriebezahnrad (70) unmittelbar benachbart zur Bodenfläche (49) angeordnet sind.

11. Getriebe-Antriebseinheit (10) nach einem der vorhergehenden Ansprüche, **dadurch gekennzeichnet, dass** im Bereich der geringeren Bauhöhe (74) außerhalb des Gehäuses (16, 18, 20) ein Momentübertragungselement (42) - beispielsweise eine Seiltrommel (43) oder ein Abtriebsritzel (40) - angeordnet ist, das drehfest mit dem Abtriebsrad (34) verbunden ist, und insbesondere ein bewegliches Teil im Kraftfahrzeug verstellt.

## Claims

1. Transmission/drive unit (10) with a housing (16, 18, 20) in which are arranged an electric motor (12) with a laminated armature core (24) and with an armature shaft (22) having a worm (26), and also a transmission (14) following the said armature shaft, the transmission (14) having an output wheel (34) mounted on an axis of rotation (36), and the housing (16, 18, 20) being formed approximately symmetrically to a plane of symmetry (46) which is arranged transversely to the armature shaft (22) and which runs through the axis of rotation (36) of the output wheel (34), **characterized in that** an electrical connecting plug (58) is arranged between the laminated armature core (24) and the worm (26) on the housing (16, 18, 20), and the plane of symmetry (46) runs through the connecting plug (58).

2. Transmission/drive unit (10) according to Claim 1, **characterized in that** the connecting plug (58) has plug pins (61) which project radially from the armature shaft (22).

3. Transmission/drive unit (10) according to either one of Claims 1 and 2, **characterized in that** the plug pins (61) are connected to a compact electronic module (56) which is intersected by the plane of symmetry (46) and cooperates with a collector (62) and with a position transmitter (64) which are arranged on the armature shaft (22).

4. Transmission/drive unit (10) according to one of the preceding claims, **characterized in that** the housing (16, 18, 20) has essentially a triangular base area (24) which is subdivided by the plane of symmetry (46) into two approximately uniform triangles.

5. Transmission/drive unit (10) according to one of the preceding claims, **characterized in that** the housing (16, 18, 20) has a screw-on pattern for fastening to the motor vehicle, which screw-on pattern is likewise formed essentially symmetrically to the plane of symmetry (46), in particular at least one screw-on point lying in the plane of symmetry (46).

6. Transmission/drive unit (10) according to one of the preceding claims, **characterized in that**, for torque transmission between the worm (26) and the output element (34), an intermediate gearwheel (32) is arranged on a second axis of rotation (38) and, in particular, meshes with the worm (26).

7. Transmission/drive unit (10) according to one of the preceding claims, **characterized in that**, on the second axis of rotation (38), a further transmission gearwheel (70) is arranged, which is connected fixedly in terms of rotation to the intermediate gearwheel (32) and which, in particular, engages into the output wheel (34).

8. Transmission/drive unit (10) according to one of the preceding claims, **characterized in that** the first and/or the second axis of rotation (36, 38) are formed as bearing bolts (72) which are fixed to the housing and on which the output wheel (34) and the intermediate gearwheel (32) are respectively mounted rotatably.

9. Transmission/drive unit (10) according to one of the preceding claims, **characterized in that** the housing (16) has an essentially shell-shaped basic body (18) and a cover (20) mountable radially with respect to the armature shaft (22), as a result of which, with the housing (16, 18, 20) closed, an overall height (74, 76, 78) of the housing (16, 18, 20) is obtained, the overall height (74) in the region of the output element (34) being lower than the overall height (76) in the region of the intermediate gearwheel (32).

10. Transmission/drive unit (10) according to one of the preceding claims, **characterized in that** the base area (48) of the housing (16, 18, 20) is formed approximately as a planar bottom surface (49), and the output wheel (34) and the transmission gearwheel (70) are arranged directly adjacently to the bottom surface (49).

11. Transmission/drive unit (10) according to one of the preceding claims, **characterized in that** in the region of the lower overall height (74), outside the housing (16, 18, 20), a torque transmission element (42), for example a cable drum (43) or an output pinion (40), is arranged, which is connected fixedly in terms of rotation to the output wheel (34) and which, in particular, adjusts a movable part in the motor vehicle.

## Revendications

1. Unité d'entraînement à transmission (10) comportant un boîtier (16, 18, 20) logeant un moteur électrique (12) comportant un paquet d'induit (24) ainsi qu'un arbre d'induit (22) muni d'une vis (26) et d'une transmission (14) en aval de celle-ci,
la transmission (14) ayant une roue entraînée (34) montée sur un arbre (36), et le boîtier (16, 18, 20) est réalisé pratiquement de manière symétrique par rapport à un plan de symétrie (46) coupant l'arbre d'induit (22) et passant par l'axe de rotation (36) de l'arbre entraîné (34),
**caractérisée en ce qu'**
un connecteur de branchement électrique (58) est prévu entre le paquet d'induit (24) et la vis (26) sur le boîtier (16, 18, 20) et le plan de symétrie (46) passe par le connecteur de branchement (58).

2. Unité d'entraînement à transmission (10) selon la revendication 1,
**caractérisée en ce que**
le connecteur de branchement (58) comporte des broches (61) qui sont radialement en saillie par rapport à l'arbre d'induit (22).

3. Unité d'entraînement à transmission (10) selon l'une des revendications 1 ou 2,
**caractérisée en ce que**
les broches de connexion (61) sont reliées à un module électronique compact (56) coupé par le plan de symétrie (46) et coopérant avec un collecteur (62) et un capteur de position (64) installés sur l'arbre d'induit (22).

4. Unité d'entraînement à transmission (10) selon l'une des revendications précédentes,
**caractérisée en ce que**
le boîtier (16, 18, 20) a principalement une surface de base triangulaire (24) subdivisée par le plan de symétrie (46) en deux triangles pratiquement de même forme.

5. Unité d'entraînement à transmission (10) selon l'une des revendications précédentes,
**caractérisée en ce que**
le boîtier (16, 18, 20) comporte un gabarit de vissage pour être fixé à un véhicule qui est réalisé également pratiquement de manière symétrique par rapport au plan de symétrie (46) et notamment au moins un point de vissage se situe dans le plan de symétrie (46).

6. Unité d'entraînement à transmission (10) selon l'une des revendications précédentes,
**caractérisée en ce qu'**
un pignon intermédiaire (32) est installé sur un second axe de rotation (38) pour transmettre le couple entre la vis (26) et l'élément entraîné (34), ce pignon intermédiaire (32) engrenant notamment avec la vis (26).

7. Unité d'entraînement à transmission (10) selon l'une des revendications précédentes,
**caractérisée en ce qu'**
un autre pignon denté de transmission (70) est installé sur le second axe de rotation (38), ce pignon étant relié solidairement en rotation au pignon denté intermédiaire (32) et il engrène notamment avec le pignon entraîné (34).

8. Unité d'entraînement à transmission (10) selon l'une des revendications précédentes,
**caractérisée en ce que**
le premier et/ou le second axe de rotation (36, 38) sont réalisés sous la forme de goujons de palier (72) solidaires du boîtier, recevant à rotation le pignon entraîné (34) ou le pignon denté intermédiaire (32).

9. Unité d'entraînement à transmission (10) selon l'une des revendications précédentes,
**caractérisée en ce que**
le boîtier (16) comporte un corps de base (18) pratiquement en forme de coquille ainsi qu'un couvercle (20) monté radialement par rapport à l'arbre d'induit (22), ce qui donne pour un boîtier fermé (16, 18, 20) la hauteur de construction (74, 76, 78) du boîtier (16, 18, 20), la hauteur de construction (74) dans la région de l'élément entraîné (34) étant inférieure à la hauteur de construction (76) dans la région du pignon denté intermédiaire (32).

10. Unité d'entraînement à transmission (10) selon l'une des revendications précédentes,
**caractérisée en ce que**
la surface de base (48) du boîtier (16, 18, 20) est réalisée pratiquement comme surface de fond, plane (49), le pignon entraîné (34) et le pignon denté de transmission (70) étant installés directement au voisinage de la surface de fond (49).

11. Unité d'entraînement à transmission (10) selon l'une quelconque des revendications précédentes,
**caractérisée en ce que**
dans la région de la faible hauteur de construction (74), à l'extérieur du boîtier (16, 18, 20), on a un élément de transmission de moment (42) par exemple un tambour à câble (43) ou un pignon entraîné (40) relié solidairement en rotation au pignon entraîné (34) et qui déplace notamment une pièce mobile du véhicule automobile.
